# EUROPEAN PATENT SPECIFICATION

(11) **EP 2 913 899 B1**
(45) Date of publication and mention of the grant of the patent: **01.03.2017**
(21) Application number: 13849488.5
(22) Date of filing: 09.10.2013
(51) Int. Cl.: H01R 13/52, B60L 11/18, H01R 13/504

(54) **CHARGING CONNECTOR**
LADESTECKER
CONNECTEUR DE CHARGE

(30) Priority: 25.10.2012 JP 2012235540
(43) Date of publication of application: 02.09.2015
(73) Proprietor: Yazaki Corporation, Tokyo 108-0073 (JP)
(72) Inventor: SAWADA, Tsutomu, Kakegawa-shi Shizuoka 437-1421 (JP); YAMADA, Norihisa, Kakegawa-shi Shizuoka 437-1421 (JP)
(74) Representative: Hoffmann Eitle
(86) International application number: PCT/JP2013/077459
(87) International publication number: WO 2014/065120

(56) References cited:
- WO-A1-2012/139982
- WO-A2-2011/162926
- JP-A- H06 333 633
- JP-A- 2010 182 471
- JP-A- 2012 146 652
- JP-A- 2012 230 850
- JP-A- 2013 097 898
- JP-A- 2013 140 699

## Description

### Technical Field

The present invention relates to a charging connector used at the time of charging a battery mounted on a vehicle such as an electric vehicle or a hybrid electric vehicle.

### Background Art

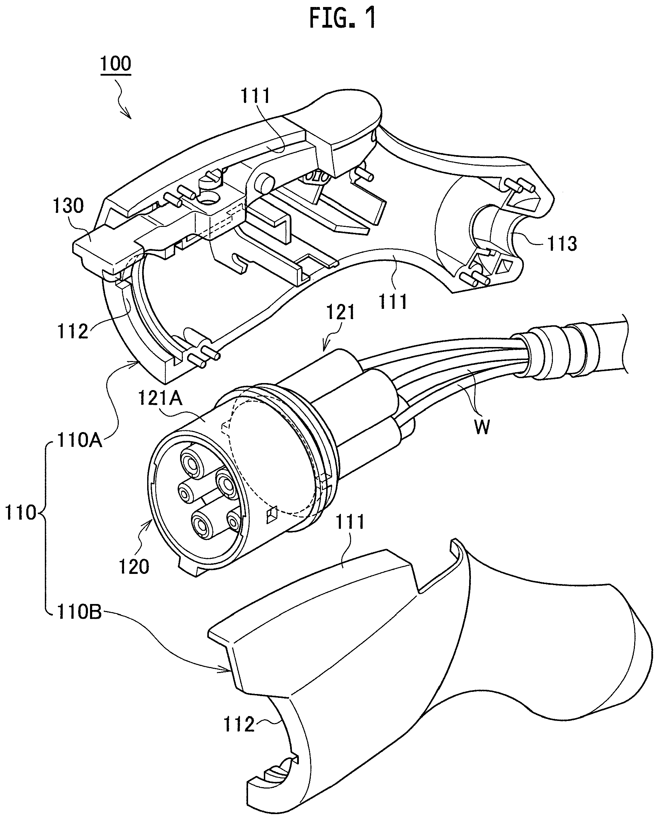

A charging connector has been used for charging a battery mounted on a vehicle such as an electric vehicle (EV) or a hybrid electric vehicle (HEV) (see Patent Literature 1). An example relating to this type of charging connector is described by reference to FIG. 1.

As shown in FIG. 1, a charging connector 100 includes an exterior case 110, a connector body 120 arranged in the inside of the exterior case 110, and a lock arm 130 arranged in the inside of the exterior case 110.

The exterior case 110 is formed of two case split bodies 110A, 110B. The respective case split bodies 110A, 110B have abutting surfaces 111 which are made to come into contact with each other, and the exterior case 110 is formed by making the abutting surfaces 111 come into contact with each other. A connector fitting portion exposing hole 112 is formed in a front end portion of the exterior case 110. An electric wire pullout hole 113 is formed in a rear end side of the exterior case 110.

The connector body 120 includes: a connector housing 121; and a plurality of terminals (not shown) housed in a terminal housing chamber (not shown) of the connector housing 121. A front portion of the connector body 121 projects to the outside of the exterior case 110 through the connector fitting portion projecting hole 112. This projecting portion forms a connector fitting portion 121A which is fitted into an electricity receiving inlet device (not shown).

Electric wires W are respectively connected to respective terminals (not shown). Rubber plugs (not shown) are mounted on an electric wire wiring portion of the connector housing 121. Due to such a connection, the intrusion of water into the inside of the connector housing 121 is prevented. The respective electric wires W pulled out from the connector housing 121 are led out to the outside of the exterior case 110 through the electric wire pullout hole 113.

The lock arm 130 is swingably supported on the exterior case 110. A front side and a rear side of the lock arm 130 are respectively exposed from the exterior case 110. The lock arm 130 is located at an unlocked position in a step of fitting into the charging inlet device (not shown), and is positioned at a locked position at a fitting completion position.

In the above-mentioned related art, even when water intrudes into the inside of the exterior case 110, the rubber plugs prevent intruded water from reaching a terminal (not shown) position of the connector housing 121. Accordingly, waterproofing of terminals (not shown) is ensured.

### Citation List

### Patent Literature

Patent Literature 1: Japanese Unexamined Patent Application Publication No. 2010-182471

In addition, WO 2012/139982 A1 describes a charging plug for connection to a charging socket of a device which is intended to be charged, for example, a motor vehicle which is at least partially driven by electrical energy, or a device which provides charging energy. In order to prevent the charging plug from prematurely becoming defective as a result of corrosion or electromigration, there is provision according to the invention for a switching device of the charging plug to be arranged partially inside and partially outside an enclosed conduction chamber.

### Summary of Invention

The rubber plugs are expensive, and it is necessary to provide the rubber plugs the number of which corresponds to the number of terminals. Accordingly, a cost of parts, an assembling operation cost and the like are pushed up, thus pushing up a cost of the charging connector 100. The greater the number of terminals, the more the cost is pushed up.

It is an object of the present invention to provide a charging connector having the structure which waterproofs terminals at a low cost.

A charging connector in accordance with some embodiments includes: an exterior case having two case split bodies assembled to each other with abutting surfaces of the two case split bodies being in contact with each other, the two case split bodies as assembled having a connector fitting portion projecting hole and an electric wire pullout hole; a connector body housed inside the exterior case and having a connector fitting portion exposed outside the exterior case through the connector fitting portion projecting hole; and a seal member formed of an integral body including a case split surface seal portion arranged along whole circumferences of the abutting surfaces surrounding a portion of the connector body housed inside the exterior case and interposed between the abutting surfaces of the two case split bodies, a connector body seal portion arranged along a whole circumference of the connector fitting portion projecting hole and interposed between the exterior case and the connector body, and an electric wire seal portion arranged along a whole circumference of the electric wire pullout hole and interposed between the exterior case and an electric wire pulled out from the connector body and led outside the exterior case through the electric wire pullout hole.

According to the above-mentioned constitution, the intrusion of water into the connector body in the inside of the exterior case is prevented by the seal member and hence, waterproofing of the terminals in the inside of the connector body can be realized. The seal member is a single part which is interposed between two case split bodies, and is also assembled between the exterior case and the connector body as well as between the exterior case and the electric wire. Accordingly, compared to the case where waterproof plugs are mounted on terminals respectively, a cost of parts, an assembling cost and the like can be reduced. Further, even when the number of terminals is increased, the constitution does not push up a cost. Accordingly, the present invention can provide a charging connector having the structure which waterproofs terminals and can be manufactured at a low cost.

### Brief Description of Drawings

FIG. 1 is an exploded perspective view of a charging connector according to the related art.
FIG. 2 is an overall perspective view of the charging connector according to one embodiment of the present invention.
FIG. 3 is an exploded perspective view of the charging connector according to one embodiment of the present invention.
FIG. 4 is a cross-sectional view of the charging connector according to one embodiment of the present invention.
FIG. 5 is a cross-sectional view taken along a line V-V in FIG. 4.
FIG. 6A is a cross-sectional view taken along a line VIA-VIA in FIG. 4.
FIG. 6B is a cross-sectional view taken along a line VIB-VIB in FIG. 4.

### Description of Embodiments

An embodiment of the present invention will be described hereinafter with reference to the drawings.

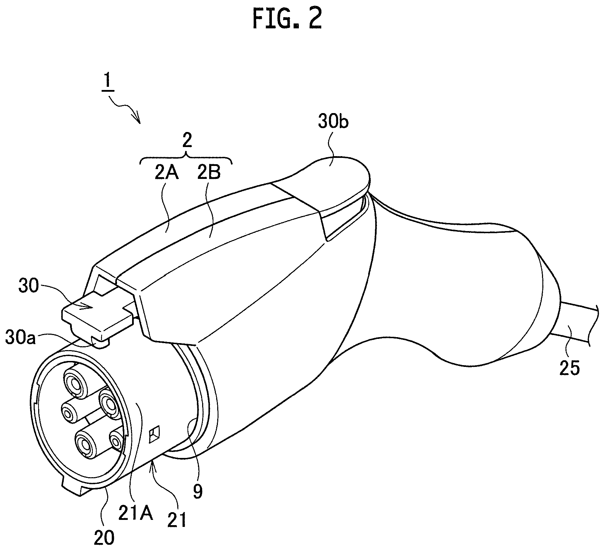

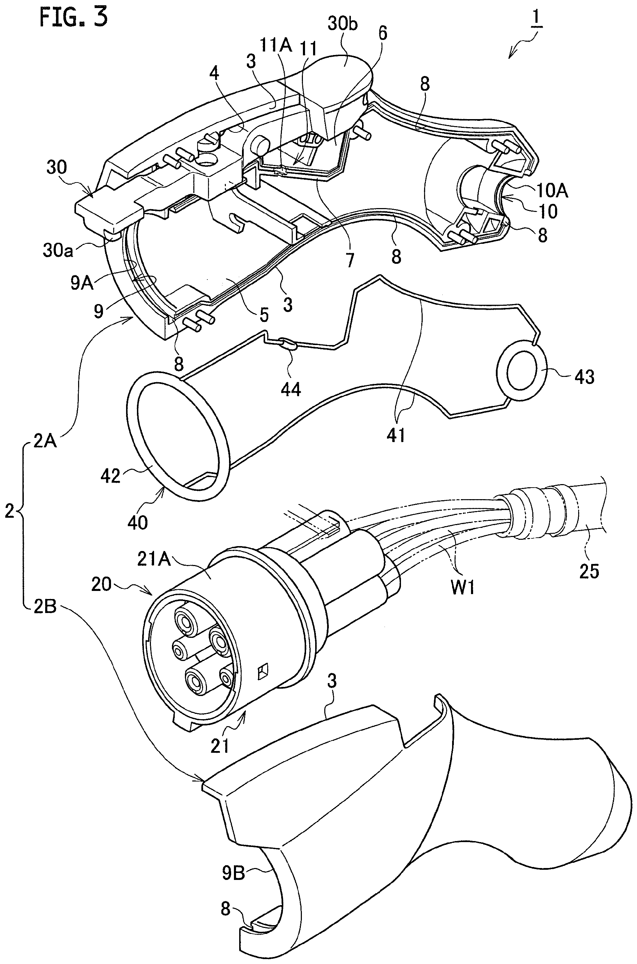

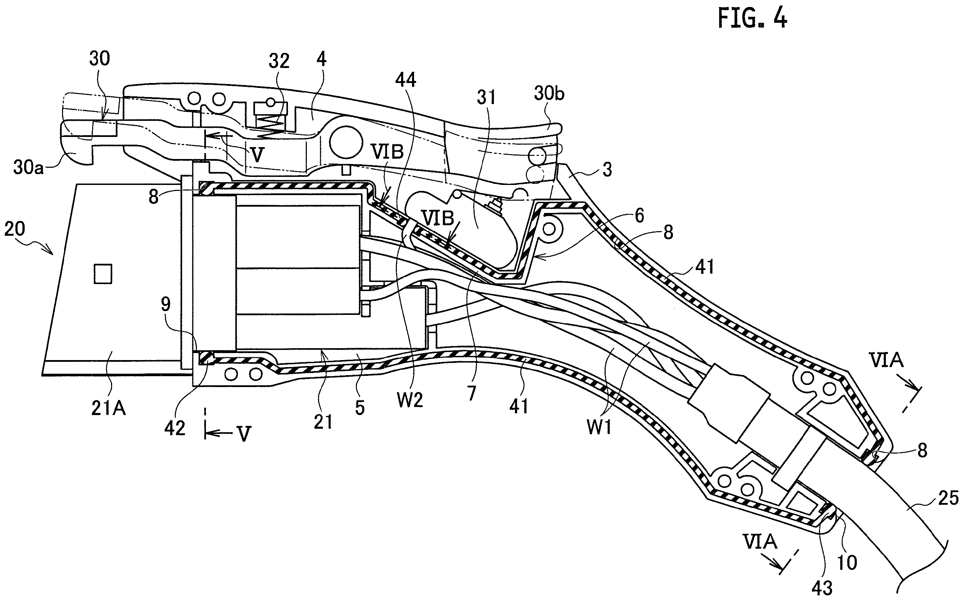

FIG. 2 to FIG. 6B show one embodiment of the present invention. As shown in FIG. 2 to FIG. 4, a charging connector 1 includes: an exterior case 2; a connector body 20 which is housed in the inside of the exterior case 2; a lock arm 30 which is arranged in the inside of the exterior case 2; a micro switch 31 which is turned on or off by the lock arm 30; and a seal member 40.

The exterior case 2 is constituted of two case split bodies 2A, 2B which are assembled to each other. An abutting surface 3 is formed on the substantially whole outer periphery of each case split body 2A, 2B. Each case split body 2A, 2B has a lock arm housing chamber 4 and a connector housing chamber 5 therein, and these housing portions 4, 5 are partitioned from each other by an inner partition wall 6. A distal end surface of the inner partition wall 6 forms an abutting surface 7. A seal holding groove 8 is formed on the abutting surfaces 3, 7 which surround the connector housing chamber 5.

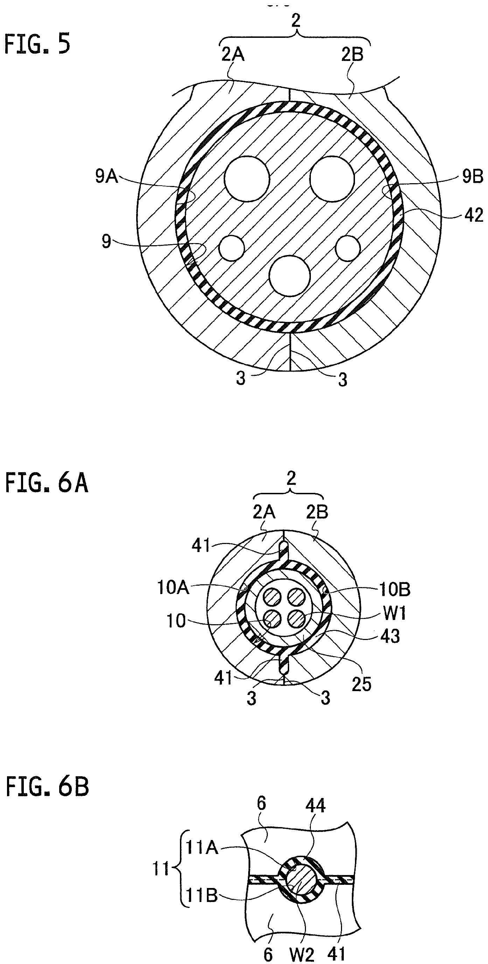

Two case split bodies 2A, 2B are assembled to each other in a state where the abutting surfaces 3, 7 of the case split bodies 2A, 2B are in contact with each other. Front end portions and rear end portions of the respective case split bodies 2A, 2B are formed into semicircular arc-shaped recessed portions 9A, 9B respectively. In an assembled state of the exterior case 2, a connector fitting portion projecting hole 9 is formed by both recessed portions 9A, 9B formed on the front end portions of the case split bodies 2A, 2B. In an assembled state of the exterior case 2, an electric wire pullout hole 10 is formed by both recessed portions 10A, 10B formed on the rear end portions of the case split bodies 2A, 2B respectively (see FIG. 5). A circular arc-shaped recessed portion 11A, 11B (see FIG. 6A) is formed on the inner partition wall 6 of each case split body 2A, 2B. In an assembled state of the exterior case 2, an electric wire penetrating hole 11 is formed by the recessed portions 11A, 11B of the inner partition walls 6 of both case split bodies 2A, 2B (see FIG. 6B). A seal holding groove 8 is also formed on inner surfaces of the respective recessed portions 9A, 9B, 10A, 10B, 11A, 11B.

The connector body 20 is housed in the connector housing chamber 5. The connector body 20 includes: a connector housing 21; and a plurality of terminals (not shown) which are housed in a terminal housing chamber (not shown) of the connector housing 21. A front portion of the connector housing 21 forms a connector fitting portion 21A which is fitted in an electricity receiving inlet device (not shown). The connector fitting portion 21A projects to the outside of the exterior case 2 from the connector fitting portion projecting hole 9.

The plurality of terminals (not shown) are constituted of two kinds of terminals, that is, power supply terminals and a fitting detection terminal. Electric wires W1 are connected to respective terminals (not shown). The plurality of electric wires W1 pulled out from the connector housing 21 are housed in a protective tube 25 and are led out to the outside of the exterior case 2 from the electric wire pullout hole 10.

The lock arm 30 and the micro switch 31 are housed in the lock arm housing chamber 4. The lock arm 30 is swingably supported on the exterior case 2. A front side and a rear side of the lock arm 30 are respectively exposed from the exterior case 2. A locking pawl 30a is formed on the front side of the lock arm 30. The rear side of the lock arm 30 forms a release operation portion 30b. The lock arm 30 is biased to a locking side by a spring force of a spring 32.

The inside of a case of the micro switch 31 is filled with an adhesive agent. Due to such a filled adhesive agent, the inside of the micro switch 31 is waterproofed. The micro switch 31 and one fitting detection terminal (not shown) are connected to each other by an inner electric wire W2. Due to such a constitution, the presence or the non-presence of a fitting state between the charging connector and a charging inlet device can be detected.

The seal member 40 is made of a rubber material having excellent elasticity. The seal member 40 is formed of an integral body constituted of: a case split surface seal portion 41 which is arranged along the whole circumferences of the abutting surfaces 3, 7 of the case split bodies 2A, 2B which surround the connector body 20 housed in the exterior case 2; a connector body seal portion 42 which is arranged along the whole circumference of the connector fitting portion projecting hole 9; an electric wire seal portion 43 which is arranged along the whole circumference of the electric wire pullout hole 10; and an inner electric wire seal portion 44 which is arranged along the whole circumference of the electric wire penetrating hole 11. The case split surface seal portion 41 is interposed between two case split bodies 2A, 2B, and hermetically seals a gap formed between two case split bodies 2A, 2B by making use of an elastic compression of the case split surface seal portion 41. As will be described in detail by reference to FIG. 5, the connector body seal portion 42 is interposed between the exterior case 2 and the connector body 20, and hermetically seals a gap formed between the exterior case 2 and the connector body 20 by making use of an elastic compression of the connector body seal portion 42. As will be described in detail by reference to FIG. 6A, the electric wire seal portion 43 is interposed between the exterior case 2 and the protective tube 25 for the electric wires W1, and hermetically seals a gap formed between the exterior case 2 and the protective tube 25 for the electric wires W1 by making use of an elastic compression of the electric wire seal portion 43. As will be described in detail by reference to FIG. 6B, the inner electric wire seal portion 44 is interposed between the inner partition walls 6 of both case split bodies 2A, 2B and the inner electric wire W2, and hermetically seals a gap formed between the inner partition walls 6 and the inner electric wire W2 by making use of an elastic compression of the inner electric wire seal portion 44.

In the charging connector 1 having the above-mentioned constitution, the intrusion of water through a gap formed between the case split bodies 2A, 2B is prevented by the case split surface seal portion 41. The intrusion of water into the connector housing chamber 5 from the connector fitting portion projecting hole 9 of the exterior case 2 is prevented by the connector body seal portion 42. The intrusion of water into the connector housing chamber 5 from the electric wire pullout hole 10 of the exterior case 2 is prevented by the wire seal portion 43. The intrusion of water into the connector housing chamber 5 from the electric wire penetrating hole 11 in the exterior case 2 is prevented by the inner electric wire seal portion 44. In this manner, the intrusion of water into the connector housing chamber 5 formed in the exterior case 2, that is, the intrusion of water into the connector body 20 can be prevented by the seal member 40 and hence, the terminals (not shown) in the connector body 20 can be waterproofed. In this embodiment, the seal member 40 is formed of a single part which is interposed between two case split bodies 2A, 2B and is also assembled between the exterior case 2 and the connector body 20 as well as between the exterior case 2 and the electric wires W1. Accordingly, a cost of parts, an assembling cost and the like can be reduced compared to the case where a waterproof plug is mounted on respective terminals (not shown). Further, even when the number of terminals (not shown) is increased, such constitution does not push up a cost. As can be understood from above, this embodiment provides the charging connector 1 having the structure where the terminals (not shown) are waterproofed at a low cost.

In this embodiment, the seal member 40 includes the inner electric wire seal portion 44 also as an integral part thereof. However, the inner electric wire W2 may be sealed by a separate seal member.

In this embodiment, the plurality of electric wires W1 pulled out from the connector body 20 are housed in the inside of the protective tube 25, and a gap formed between the protective tube 25 and the exterior case 2 is hermetically sealed by the electric wire seal portion 43 and hence, the gap can be easily hermetically sealed. The plurality of electric wires W1 may not be housed in the protective tube 25. In this case, a gap formed between the electric wires W1 and the exterior case 2 is hermetically sealed by the electric wire seal portion 43.

In this embodiment, waterproofing is provided only to the connector housing chamber 5 formed in the inside of the exterior case 2. However, the seal member 40 may be configured to hermetically seal a gap formed between the exterior case 2 and the swinging lock arm 30 thus providing waterproofing to both the connector housing chamber 5 and the lock arm housing chamber 4.

In this way, the present invention includes various embodiments not described above. Therefore, the scope of the present invention is determined only by the appended claims.

## Claims

1. A charging connector (1) comprising:
an exterior case (2) having two case split bodies (2A, 2B) assembled to each other with abutting surfaces (3) of the two case split bodies being in contact with each other, the two case split bodies as assembled having a connector fitting portion projecting hole (9) and an electric wire pullout hole (10);
a connector body (20) housed inside the exterior case and having a connector fitting portion (21A) exposed outside the exterior case through the connector fitting portion projecting hole; and
a seal member (40) formed of an integral body including
a connector body seal portion (42) arranged along a whole circumference of the connector fitting portion projecting hole and interposed between the exterior case and the connector body, and
an electric wire seal portion (43) arranged along a whole circumference of the electric wire pullout hole and interposed between the exterior case and an electric wire pulled out from the connector body and led outside the exterior case through the electric wire pullout hole,
**characterized in that** said integral body further includes
a case split surface seal portion (41) arranged along whole circumferences of the abutting surfaces surrounding a portion of the connector body housed inside the exterior case and interposed between the abutting surfaces of the two case split bodies.

2. The charging connector according to claim 1, wherein:
each case split body (2A, 2B) further has a lock arm housing chamber (4) and a connector housing chamber (5) therein,
said housing portions (4, 5) being partitioned from each other by an inner partition wall (6), and
a distal end surface of the inner partition wall (6) forms an abutting surface (7).

3. The charging connector according to claim 2, wherein:
the seal member (40) is configured to provide waterproofing to both the connector housing chamber (5) and the lock arm housing chamber (4).

4. The charging connector according to claim 2 or 3, wherein:
a circular arc-shaped recessed portion (11A, 11B) is formed on the inner partition wall (6) of each case split body (2A, 2B), and
in an assembled state of the exterior case (2), an electric wire penetrating hole (11) is formed by the recessed portions (11A, 11B) of the inner partition walls of both case split bodies.

5. The charging connector according to claim 4, wherein:
the seal member (40) further comprises an inner electric wire seal portion (44), which is arranged along the whole circumference of the electric wire penetrating hole (11).

6. The charging connector according to any one of the preceding claims, wherein:
the seal member (40) is made of rubber material and configured to hermetically seal by means of elastic compression of the seal portions.

## Patentansprüche

1. Ladestecker (1), mit:
einem Außengehäuse (2), das zwei Gehäuseteilkörper (2A, 2B) aufweist, die miteinander über in Kontakt miteinander stehende Anschlagsflächen (3) der beiden Gehäuseteilkörper montiert sind, wobei die beiden Gehäuseteilkörper im montierten Zustand eine Durchstreckungsöffnung für einen Steckerpassabschnitt (9) und eine Ausführöffnung für ein elektrisches Kabel (10) aufweisen;
einem Steckerkörper (20), der innerhalb des Außengehäuses aufgenommen ist und einen Steckerpassabschnitt (21A) aufweist, der außerhalb des Außengehäuses durch die Durchstreckungsöffnung für einen Steckerpassabschnitt freiliegt; und
einem Dichtungselement (40), das aus einem integralen Körper ausgebildet ist, und aufweist
einen Steckerkörperdichtungsabschnitt (42), der entlang eines gesamten Umfangs der Durchstreckungsöffnung für einen Steckerpassabschnitt angeordnet ist und zwischen dem Außengehäuse und dem Steckerkörper eingefügt ist, und
einen Dichtungsabschnitt für ein elektrisches Kabel (43), der entlang des gesamten Umfangs der Ausführöffnung für ein elektrisches Kabel angeordnet ist und zwischen dem Außengehäuse und einem elektrischen Kabel eingefügt ist, das durch die Ausführöffnung für ein elektrisches Kabel aus dem Außengehäuse ausgeführt ist,
**dadurch gekennzeichnet, dass** der integrale Körper ferner aufweist
einen Gehäusetrennflächen-Dichtungsabschnitt (41), der entlang gesamter Umfänge der Anschlagsflächen, die einen Abschnitt des Steckerkörpers aufgenommen innerhalb des Außengehäuses umgeben, angeordnet und zwischen den Anschlagsflächen der beiden Gehäuseteilkörper eingefügt ist.

2. Ladestecker nach Anspruch 1, wobei
jeder Gehäuseteilkörper (2A, 2B) ferner eine Verriegelungsarm-Aufnahmekammer (4) und eine Steckeraufnahmekammer (5) darin aufweist,
die Aufnahmeabschnitte (4, 5) voneinander durch eine innere Trennwand (6) getrennt sind und
eine distale Endfläche der inneren Trennwand (6) eine Anschlagsfläche (7) ausbildet.

3. Ladestecker nach Anspruch 2, wobei
das Dichtungselement (40) ausgestaltet ist, um eine Wasserdichtung sowohl für die Steckeraufnahmekammer (5) als auch die Verriegelungsarm-Aufnahmekammer (4) bereitzustellen.

4. Ladestecker nach Anspruch 2 oder 3, wobei:
ein kreisrunder, bogenförmiger ausgenommener Abschnitt (11A, 11B) an der inneren Trennwand (6) jedes Gehäuseteilkörpers (2A, 2B) ausgebildet ist und,
in einem montierten Zustand des Außengehäuses (2) eine Durchtrittsöffnung für ein elektrisches Kabel (11) durch die ausgenommenen Abschnitte (11A, 11B) der inneren Trennwände beider Gehäuseteilkörper ausgebildet ist.

5. Ladestecker nach Anspruch 4, wobei:
das Dichtungselement (40) ferner einen inneren Dichtungsabschnitt eines elektrischen Kabels (44) aufweist, der entlang des gesamten Umfangs der Durchtrittsöffnung für ein elektrisches Kabel (11) angeordnet ist.

6. Ladestecker nach einem der vorhergehenden Ansprüche, wobei:
das Dichtungselement (40) aus Gummimaterial hergestellt und ausgestaltet ist, um durch elastische Kompression der Dichtungsabschnitte hermetisch abzudichten.

## Revendications

1. Connecteur de charge (1) comprenant :
- un boîtier extérieur (2) comportant deux corps de boîtier divisés (2A, 2B) assemblés l'un à l'autre à l'aide de surfaces de butée (3) appartenant aux deux corps de boîtier divisés qui sont mises en contact l'une avec l'autre, les deux corps de boîtier divisés, une fois assemblés, présentant un orifice de saillie de partie de raccordement de connecteur (9) et un orifice de sortie de fil électrique (10) ;
- un corps de connecteur (20) logé à l'intérieur du boîtier extérieur et ayant une partie de raccordement de connecteur (21A) exposée à l'extérieur du boîtier extérieur à travers l'orifice de saillie de partie de raccordement de connecteur; et
- un élément d'étanchéité (40) formé d'un corps monobloc comprenant :
- une partie d'étanchéité de corps de connecteur (42) agencée sur la totalité d'une circonférence de l'orifice de saillie de partie de raccordement de connecteur et interposée entre le boîtier extérieur et le corps de connecteur, et
- une partie d'étanchéité de fil électrique (43) agencée sur la totalité d'une circonférence de l'orifice de sortie de fil électrique et interposée entre le boîtier extérieur et un fil électrique sorti du corps de connecteur et conduit à l'extérieur du boîtier extérieur par l'orifice de sortie de fil électrique,
**caractérisé en ce que** ledit corps monobloc comprend en outre :
- une partie d'étanchéité de surface de boîtier divisée (41) disposée sur la totalité des circonférences des surfaces de butée entourant une partie du corps de connecteur logée à l'intérieur du boîtier extérieur et interposée entre les surfaces de butée des deux corps de boîtier divisés.

2. Connecteur de charge selon la revendication 1, dans lequel :
- chaque corps de boîtier divisé (2A, 2B) comporte en outre une chambre de logement de bras de verrouillage (4) et une chambre de logement de connecteur (5) dans celui-ci,
- lesdites parties de logement (4, 5) étant séparées l'une de l'autre par une paroi de séparation intérieure (6), et
- une surface d'extrémité distale de la paroi de séparation intérieure (6) forme une surface de butée (7).

3. Connecteur de charge selon la revendication 2, dans lequel :
- l'élément d'étanchéité (40) est configuré pour fournir une étanchéité à l'eau à la fois à la chambre de logement de connecteur (5) et à la chambre de logement de bras de verrouillage (4).

4. Connecteur de charge selon la revendication 2 ou 3, dans lequel :
- une partie circulaire renfoncée en forme d'arc de cercle (11A, 11B) est formée sur la paroi de séparation intérieure (6) de chaque corps de boîtier divisé (2A, 2B), et
- dans un état assemblé du boîtier extérieur (2), un orifice d'introduction de fil électrique (11) est formé par les parties renfoncées (11A, 11B) des parois de séparation intérieures des deux corps de boîtier divisés.

5. Connecteur de charge selon la revendication 4, dans lequel :
- l'élément d'étanchéité (40) comprend en outre une partie interne d'étanchéité de fil électrique (44) qui est agencée sur la totalité de la circonférence de l'orifice d'introduction de fil électrique (11).

6. Connecteur de charge selon l'une quelconque des revendications précédentes, dans lequel :
- l'élément d'étanchéité (40) est réalisé en matériau en caoutchouc et configuré pour sceller hermétiquement au moyen d'une compression élastique des parties d'étanchéité.
